# EUROPÄISCHE PATENTANMELDUNG

(11) **EP 1 785 334 A2**
(43) Veröffentlichungstag der Anmeldung: **16.05.2007**
(21) Anmeldenummer: 06023171.9
(22) Anmeldetag: 08.11.2006
(51) Int. Cl.: B62B 1/12, B62B 5/00

(54) **Hubgerät für eine Karre und eine dazugehörige Befestigungsvorrichtung**

(30) Priorität: 14.11.2005 DE 202005017865 U
(71) Anmelder: Creative B OHG Marco & Roland Bertiller OHG, 88690 Mühlhofen (DE)
(72) Erfinder: Bertiller, Roland, 78713 Schramberg-Sulgen (DE); Bertiller, Marco, 88690 Mühlhofen (DE)
(74) Vertreter: Dietrich, Barbara

(57) **Zusammenfassung**

Vorgeschlagen wird ein insbesondere nachrüstbares Zusatzteil in Form eines Hubgeräts (10), welches an eine vorhandene Konstruktion (100) angebracht werden kann, wobei ein motorischer Antrieb (8) über eine Kette (2) eine Lastenplatte bzw. Hubplatte (5) in der Höhe verstellen bzw. anheben kann. Das Adapterteil (10) weist einen Rahmen (1) auf, und verfügt über ein im Rahmen (1) integriertes Hubsystem bzw. Hubgetriebe (8) und über eine Selbsthemmung, so dass kein Durchsacken der Last erfolgen kann.

## Beschreibung

Die Erfindung betrifft ein Adapterteil, welches an eine Karre oder dergleichen adaptierbar ist.

Bekannt sind Karren oder Lastenheber, die einen Rahmen aufweisen, mit beidseits des Karrenrahmens angeordneten Griffen und eine Art Fortbewegungsmittel wie Räder sowie eine mit dem Karrenrahmen verbundene Aufnahme- bzw. Lastplatte. Diese in der Praxis auch als Sackkarren bekannten Einrichtungen dienen in der Regel zum Transport von Lasten.

Aus der DE 299 22 037 U1 ist eine Container- Transport- Karre mit zwei mechanischen Lastaufnahtnearmen zum mühelosen Transport von runden sowie eckigen Behältnissen bekannt.

Einen elektrisch betriebenen Sackkarren mit Dreiachskette offenbart die DE 298 07 626 U1. Hierbei wird ein Motor zum Antrieb des Karrens mitgeführt.

Ein Transportgerät mit Rollenkettenvorrichtung zum Antrieb ist auch der DE 298 05 410 U1 entnehmbar.

Eine Karre mit Hubelement wird in der DE 201 15 022 U1 vorgeschlagen, wobei das Hubelement im Karrenrahmen gelagert ist und mittels im Karrenrahmen gelagerten Antriebs heb-und senkbar ist. Eine Bodenplatte des Hubelements ist dabei parallel zu einer Aufnahrneplatte ausgerichtet und übernimmt die Funktion des Lasthebens, d.h., die der Aufnahmeplatte. Zum Heben des Hubelements ist ein Seilzug vorgesehen.

Die Erfindung stellt sich die Aufgabe, eine Vorrichtung anzugeben, mit der ein sicheres und leichtes Heben ermöglicht wird.

Die Aufgabe wird durch die Merkmale des Patentanspruchs 1 gelöst.

Vorteilhafte Ausgestattungen sind in den Unteransprüchen aufgeführt.

Der Lösung liegt die Idee zugrunde, ein insbesondere nachrüstbares Zusatzteil in Form eines Adapters anzubieten, welches an eine vorhandene Konstruktion angebracht werden kann, wobei ein motorischer Antrieb über eine Kette eine Lastenplatte bzw. Hubplatte dieses Adapterteils in der Höhe verstellen bzw. anheben kann. Das Adapterteil weist einen Rahmen auf, verfügt über ein im Rahmen integriertes Hubsystem bzw. Hubgetriebe und über eine Selbsthemmung, so dass kein Durchsacken der Last erfolgen kann.

Diese Selbsthemmung erfolgt in einer bevorzugten Ausführung aufgrund einer integrierten Schnecke und einer entsprechenden Untersetzung des Hubgetriebes, so dass das System bei Stromabschaltung oder Stromverlust selbst hemmend ist.

Als eine weitere Maßnahme ist vorgesehen, dass über eine Steuerung bei Stromabschaltung /-verlust der Getriebemotor kurz geschlossen wird, wodurch der Motor elektrisch blockiert wird.

An den Endpunkten des Hubweges befinden sich vorzugsweise Sensoren oder dergleichen, welche dann Umschaltrelais ansteuern. Eine Überlastung wird durch eine automatische Stromabschaltung vermieden.

Die Lösung ist gedacht für ein Nach- und Neurüsten bereits vorhandener Sackkarren zu einem so genannten Handlifter. Dazu weist der Adapter am Adapterrahmen Nasen oder Haken und dergleichen zum Einhängen inlan die Karre bzw. das Grundgestell auf.

Mit der vorgeschlagenen Lösung können zu transportierende Lasten je nach Ausführung des Lifters bis zu 1200 mm angehoben werden.

In einer bevorzugten Weiterführung der Idee ist vorgesehen, dass der komplette Handlifter mitsamt seiner Last in ein Fahrzeug mit Ladeklappe verbringbar ist. Dazu ist fahrzeugseitig eine Vorrichtung vorgesehen, an die der Handlifter angehängt werden kann und mit diesem verschwenkbar ist.

Anhand von Ausführungsbeispielen soll die Lösung näher erläutert werden. Es zeigt.
- Fig. 1: eine Gesamtansicht des Adapterteils ohne Trägerteil,
- Fig. 2: einen elektrischen Antrieb zum Verstellen der Hubplatte aus Fig. 1,
- Fig. 3: das Adapterteil mit Träger,
- Fig. 4: eine Vorrichtung mit Adapterteil zum Transport des Adapterteils auch ohne Träger.

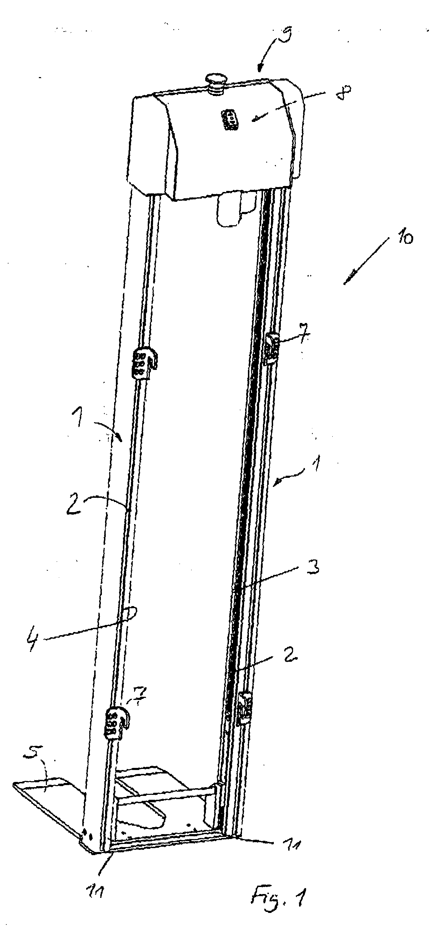

In Fig. 1 ist ein Adapterteil 10 für einen hier nicht näher dargestellten Träger, wie beispielsweise einer Sackkarre 100, gekennzeichnet, bestehend aus einem Rahmen bzw. Rahmengestell 1, in dem wenigstens ein Antriebsumlaufsystem 3, 4 zum Höhenverstellen einer Hubplatte 5 integriert ist. Das Antriebsumlaufsystem 3, 4 besitzt in einer ersten Variante eine umlaufende Kette 2. Das Endlosumlaufsystem 3, 4 kann in weiteren Varianten anstelle der Kette 2 ein Seil, Band oder dergleichen aufweisen.

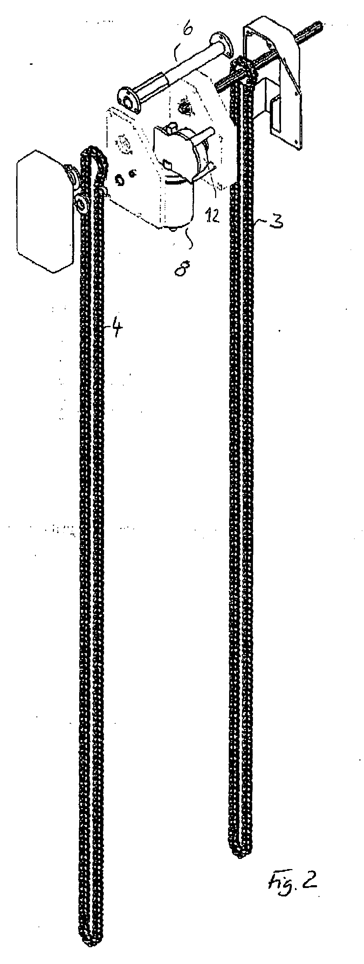

Die Ketten 2 sind vorzugsweise beidseitig in den Längsseiten im Hauptrahmen 1 integriert, die Kettensysteme 3, 4 und mit einer Keilwelle 6 (Fig. 2) formschlüssig verbunden, so dass beide Seiten synchron laufen.

Das Rahmengestellt 1 besitzt eine besondere Profilform, die es ermöglicht, die Ketten 2 verdeckt und damit geschützt zu führen. Für eine leichte Bauform des Rahmens 1 wird als Material Aluminium vorgeschlagen. Alternativ sind auch andere Materialien, wie Kunststoffe, Metalle etc. verwendbar.

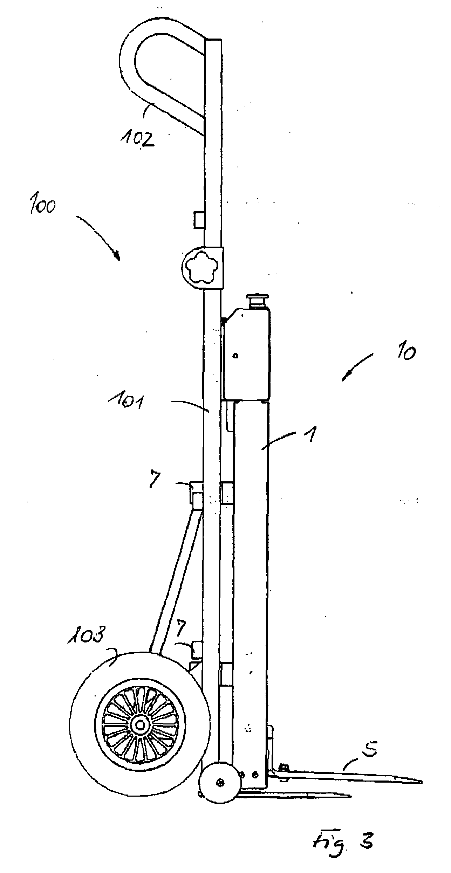

Mit 7 sind Rasthaken oder -nasen oder dergleichen bezeichnet, die zur mechanischen Befestigung an der Sackkarre 100 dienen. Die Höhe bzw. der Ort der Anbringung dieser Haken 7 kann dabei abhängig gemacht werden, von der Geometrie des Trägers 100 des Adapters 10. Der Träger 100 selbst besitzt einen Karrenrahmen 101, beidseits des Karrenrahmens 101 angeordnete Griffe 102 und Räder 103, wobei als Fortbewegungsmittel auch Kettenantriebe möglich sind (Fig. 3).

Die Hubplatte 5 ist in die beiden Hubplattenaufnahmen 11 eingesetzt und stützt sich in nicht näher dargestellten Gegenlagern ab. Das Hub- bzw. Kettensystem 3, 4 kann sich über Laufrollen an den Innenwänden des Hauptrahmens 1 abstützen.

Die Hubplatte 5 kann einklappbar sein und mit Hilfe einer Verriegelung fixiert werden. Des Weiteren ist die Form der Hubplatte 5 frei wählbar, je nach funktionalem Gebrauch. Die Hubplatte 5 kann eine Gabelform, eine Schaufelform und / oder eine Becherform etc. besitzen.

Vorzugsweise am oberen Rahmenteil des Rahmengestells 1 ist ein Antrieb 8 zum Antrieb der Ketten 2 involviert, der sich hinter einer Abdeckung 9 befindet. Fig. 2 zeigt die Kettensysteme 3, 4 und weiterhin den Getriebemotor 8 und ein Hubgetriebe 12. Die Energieversorgung kann über gerätefeste Akkumulatoren oder von externen Geräten erfolgen (nicht näher dargestellt).

Mit einem derartigen Adapter 10 können Tragkräfte bis zu 150 kg ohne Schwierigkeiten gehoben werden.

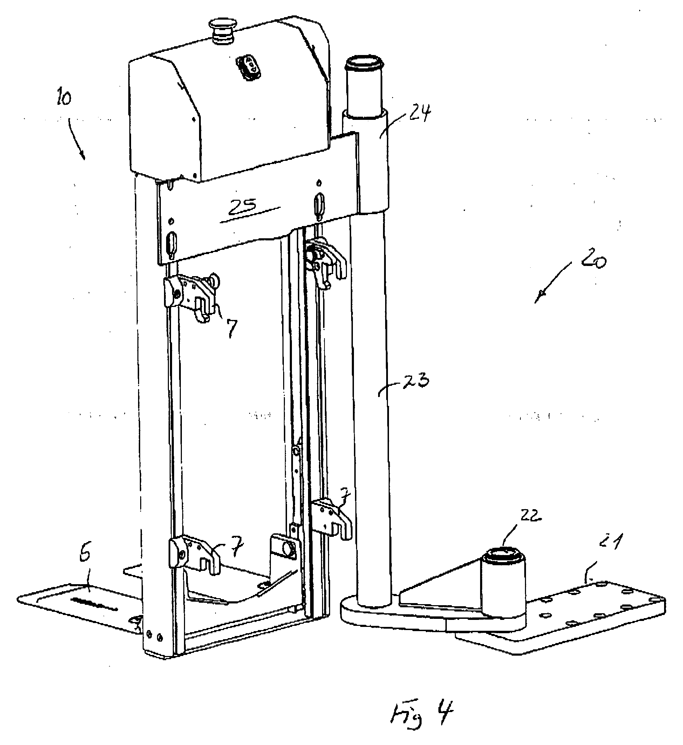

Fig. 4 zeigt eine Variante der Verbringung des Adapterteils 10 (auch ohne Träger 100) mit einem Fahrzeug oder dergleichen. Die fahrzeugseitige Vorrichtung 20 besteht im Wesentlichen aus einer am Fahrzeug befestigbaren Platte 21, auf der sich ein Schwenklager 22 befindet, welches mit einer Säule 23 zusammenwirkt. An der Säule 23 befestigt ist ein der Höhe und um die eigene Achse verstellbares bzw. bewegliches Gelenk 24 mit einer daran befindlichen Halterung bzw. Halteplatte 25, die dazu dient, das Adapterteil 10 aufzunehmen. Die Platte 21 selbst ist beispielsweise an einer bekannten Fahrzeughubplattform angebracht.

## Patentansprüche

1. Adapterteil (10) zur Adaptierung an eine Karre oder dergleichen Lasten aufnehmenden Träger (100), mit einem Rahmengestell (1), wenigstens einem Antriebsumlaufsystem (3, 4), einem manuellen, mechanischen und / oder elektrischen Antrieb (8) für das Antriebsumlaufsystem (3, 4), eine mit dem Umlaufsystem (3, 4) verbundene und an das Adapterteil (10) integrierbare Platte (5) sowie wenigstens zwei Haken (7) zur Befestigung am Träger (100).

2. Adapterteil nach Anspruch 1, **dadurch gekennzeichnet, dass** das Antriebsumlaufsystem (3, 4) eine Kette (2), ein Seil oder Band sein kann.

3. Adapterteil nach Anspruch 1 oder 2, **dadurch gekennzeichnet, dass** der Träger (100) selbst zumindest aus einem Karrenrahmen (101), beidseits des Karrenrahmens (101) angeordnete Griffe (102) und Räder (103) besteht, wobei als Fortbewegungsmittet auch Kettenantriebe möglich sind.

4. Adapterteil nach einem der Ansprüche 1 bis 3, **dadurch gekennzeichnet, dass** die Hubplatte (5) einklappbar ist und verriegelt werden kann.

5. Adapterteil nach einem der Ansprüche 1 bis 4, **dadurch gekennzeichnet, dass** die Form der Hubplatte (5) durch den funktionalen Gebrauch bestimmt wird, wobei die Hubplatte (5) eine Gabelform, eine Schaufelform und / oder eine Becherform aufweist.

6. Vorrichtung zum Verbringen eines Adapterteils nach einem der vorgenannten Ansprüche 1 bis 5, **dadurch gekennzeichnet, dass** das Adapterteil (10) auch ohne Träger (100) an eine fahrzeugseitige Vorrichtung (20) angehängt werden kann, welche im Wesentlichen aus einer am Fahrzeug befestigbaren Platte (21) besteht, auf der sich ein Schwenklager (22) befindet, welches mit einer Säule 23 zusammenwirkt, an der Säule (23) befestigt ist ein der Höhe und um die eigene Achse verstellbares bzw. bewegliches Gelenk (24) mit einer daran befindlichen Halterung bzw. Halteplatte (25) angebracht, die dazu dient, das Adapterteil (10) aufzunehmen.
